# EUROPEAN PATENT SPECIFICATION

(11) **EP 2 495 226 B1**
(45) Date of publication and mention of the grant of the patent: **31.10.2018**
(21) Application number: 11250237.2
(22) Date of filing: 01.03.2011
(51) Int. Cl.: C04B 41/50, C04B 41/87, C23C 18/12

(54) **Composite article having a ceramic nanocomposite layer**
Kompositgegenstand mit einer keramischen Nanokompositschicht
Article composite doté d'une couche nanocomposite en céramique

(43) Date of publication of application: 05.09.2012
(73) Proprietor: United Technologies Corporation, Farmington, CT 06032 (US)
(72) Inventor: Schmidt, Wayde R., Pomfret Center Connecticut 06259 (US)
(74) Representative: Dehns

(56) References cited:
- US-A- 5 194 338
- US-A- 5 196 059
- US-A- 5 558 908
- US-A- 5 985 430
- A.M. TSIRLIN ET AL.: "Strength and oxidation resistance of SiC fibers coated with various Si-containing compositions", 26TH ANNUAL CONFERENCE ON COMPOSITES, ADVANCED CERAMICS, MATERIALS, AND STRUCTURES: B 13-18 JAN. 2002 COCOA BEACH, FL, USA, vol. 23, no. 3, 2002, pages 269-276, XP002641078, Ceramic Engineering and Science Proceedings American Ceramic Soc. USA ISSN: 0196-6219

## Description

This disclosure relates to composite articles having a ceramic protective layer for improved thermal and oxidative protection.

Ceramic and metallic materials, such as superalloys, are attractive materials for use in articles that operate under severe environmental conditions. As an example, gas turbine engine components are subjected to high temperatures, corrosive and oxidative conditions, and elevated stress levels. In order to improve the thermal and oxidative stability of these components, various types of barrier layers have been used to protect the underlying substrate from the elevated temperature conditions or corrosive/oxidative environment. Exemplary prior art layers and coatings are disclosed, for example, in US 5194338, US 5558908, US 5196059 and A.M. Tsirlin et al., Ceram. Eng. Sci. Proc. 23, 269 (2002).

Viewed from a first aspect, the present invention provides a composite article comprising: a substrate; and a ceramic nanocomposite layer disposed on the substrate, the ceramic nanocomposite layer comprising a pyrolized single-source polyborosilazane pre-ceramic polymer that is a single polymer precursor structure, rather than a mixture of two or more ceramic precursor sources, the ceramic nanocomposite layer having an amorphous microstructure with regions of ordered crystalline phases that have crystal grain dimensions or domains of less than one hundred nanometers, and the ceramic nanocomposite layer having a composition comprising silicon, boron, carbon and nitrogen, and at least one oxide-forming material selected from a group consisting of oxide-forming metals/semi-metals, borides, silicides, and combinations thereof, wherein the composition of the ceramic nanocomposite layer includes a ratio, R, of silicon atoms to boron atoms of 3 ≥ R ≥ 1.

Viewed from a second aspect, the present invention provides a method of processing a composite article, comprising: forming a ceramic nanocomposite layer by pyrolizing a single-source polyborosilazane pre-ceramic polymer that is a single polymer precursor structure, rather than a mixture of two or more ceramic precursor sources, such that the ceramic nanocomposite layer has an amorphous microstructure with regions of ordered crystalline phases that have crystal grain dimensions or domains of less than one hundred nanometers, and the ceramic nanocomposite layer having a composition that includes silicon, boron, carbon and nitrogen, and at least one oxide-forming material selected from a group consisting of oxide-forming metals/semi-metal borides, silicides, and combinations thereof on a substrate, wherein the composition of the ceramic nanocomposite layer includes a ratio, R, of silicon atoms to boron atoms of 3 ≥ R ≥ 1.

Certain preferred embodiments of the present invention will now be described in greater detail, by way of example only, and with reference to accompanying figures in which:
Figure 1 illustrates an example composite article having a ceramic nanocomposite layer; and
Figure 2 illustrates composite article having a ceramic nanocomposite layer that is an embodiment of the present invention.

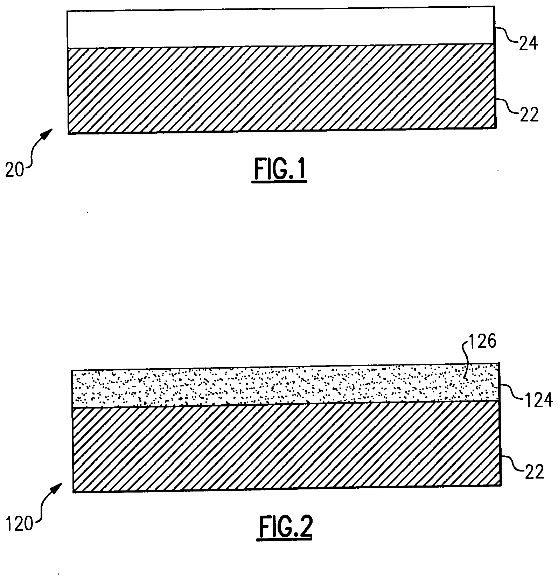

Figure 1 illustrates selected portions of an example composite article 20 having improved thermal and oxidative stability, for example. The composite article 20 is not limited to any particular type and may be, for example only, a turbine engine blade or vane, a leading edge of an airfoil, a support structure in a turbine engine, a combustor can or liner, a seal, joint or joining article, a rocket component, other component over which hot exhaust gasses pass or other type of aerospace component. Alternatively, the composite article 20 may be for any type of application that would benefit from thermal and/or oxidative stability.

In the illustrated example, the composite article 20 includes a substrate 22 and a ceramic nanocomposite layer 24 disposed on the substrate 22. Generally, the ceramic nanocomposite layer 24 protects the underlying substrate 22 from a high temperature environment and/or corrosive and oxidative environmental conditions. In this regard, the ceramic nanocomposite layer 24 may be a coating on the substrate 22 or a matrix of a ceramic matrix composite, and the substrate 22 may be a fiber in a ceramic matrix composite, the body of a component, a barrier layer that is disposed on the body of a component, a matrix in which the nanocomposite layer 24 is disposed, or any other type of substrate that would benefit from the ceramic nanocomposite layer 24.

The substrate 22 may be a silicon-based ceramic material or a metallic material. The silicon-based ceramic material may be silicon carbide (SiC), silicon nitride (Si₃N₄), silicon carbonitride, a silicon-carbon-nitrogen-containing ceramic material, or combinations thereof, including oxygen-containing forms of these materials. In other examples, the substrate 22 may be a metallic material, such as a superalloy. For instance, the superalloy may be a nickel-based or cobalt-based alloy. In any case, the substrate 22 would benefit from additional thermal and corrosion/oxidative resistance for the intended end use. In this regard, the ceramic nanocomposite layer 24 facilitates improving the thermal and oxidative stability of the composite article 20.

The ceramic nanocomposite layer 24 includes a composition having silicon, boron, carbon and nitrogen. In this disclosure, the term "nanocomposite" may refer to a multi-phase microstructure wherein one or more of the phases includes at least one dimension that is less than one-hundred nanometers. In some examples, the ceramic nanocomposite layer 24 may have more than one phase or all of its phases include at least one dimension that is less than one-hundred nanometers. In a further example, the ceramic nanocomposite layer 24 may have all of the dimensions of each phase be less than one-hundred nanometers. The term "nanocomposite" or "nanophase" in this disclosure is also used to refer to materials that are considered amorphous, as determined by standard X-ray diffraction techniques, yet actually contain regions of ordered, crystalline phases with crystal grain dimensions or domains less than one-hundred nanometers.

As will be described in more detail below, the particular nanophases of the ceramic nanocomposite layer 24 depend upon the processing methods used to form a ceramic nanocomposite layer 24. In some examples, the ceramic nanocomposite layer 24 may include silicon nitride (Si₃N₄) and boron nitride (BN). The boron nitride may be present in crystalline, amorphous or turbostratic forms. In other examples, the ceramic nanocomposite layer 24 may also include carbon in the composition. The carbon may be present within the microstructure in various forms, such as silicon carbide (SiC), boron carbide (B₄C) or as regions of graphite, turbostratic carbon or graphene.

The composition of the ceramic nanocomposite layer 24 is controlled during processing by controlling a ratio, R, of silicon atoms to boron atoms. The ratio, R, of silicon atoms to boron atoms is 3 ≥ R ≥ 1. The ratio, along with the selected processing parameters during the processing stage, control the composition and microstructure of the final ceramic nanocomposite layer 24. Thus, the ratio and processing parameters may be varied and controlled to yield particular compositions and microstructures that are beneficial for the intended end use application.

Figure 2 illustrates an embodiment composite article 120 that is somewhat similar to the composite article 20 shown in Figure 1. In this disclosure, like reference numerals designate like elements where appropriate, and reference numerals with the addition of one hundred or multiples thereof designate modified elements that are understood to incorporate the same features and benefits of the corresponding original elements. In this embodiment, the composite article 120 includes a ceramic nanocomposite layer 124 disposed on the substrate 22. The ceramic nanocomposite layer 124 is identical to the ceramic nanocomposite layer 24 but additionally includes an oxide-forming material 126 dispersed therethrough.

The oxide-forming material 126 may include an oxide-forming metal or semi-metal selected from aluminum, titanium, zirconium, hafnium, vanadium, niobium, tantalum, chromium, boron, molybdenum, tungsten, yttrium, ytterbium, scandium, rhenium, and combinations thereof. The oxide-forming material 126 may be in elemental form or in compound form. In one example, the oxide-forming material 126 includes at least hafnium. In other examples, the oxide-forming material 126 includes at least zirconium and/or aluminum.

The oxide-forming material 126 serves as an oxygen scavenger by reacting with available oxygen to form a stable oxide. The reaction with oxygen consumes at least a portion of the available oxygen and thereby prevents the oxygen from reacting with elements of the substrate 22 or elements of any other adjacent materials. The example oxides are thermally stable and may physically expand to self-repair microcracks in the ceramic nanocomposite layer 124. The oxides may also react with elements of the substrate 22 or elements from any adjacent materials to form stable compounds or glasses that further enhance the thermal stability of the composite article 120.

The oxide-forming material 126 may additionally or alternatively include a boride material. The boride material may include at least one boride of titanium, zirconium, hafnium, niobium, vanadium, tantalum and tungsten. The borides are thermally stable and may react with elements of the substrate 22 or oxygen or elements from any adjacent materials to form stable compounds or glasses that further enhance the thermal stability of the composite article 120.

The oxide-forming material 126 may additionally or alternatively include a silicide material. The silicide material may include at least one silicide of zirconium, hafnium, niobium, vanadium, titanium, tantalum, boron, molybdenum and tungsten. The silicides are thermally stable and may react with elements of the substrate 22 or oxygen or elements from any adjacent materials to form stable compounds or glasses that further enhance the thermal stability of the composite structure 120.

An embodiment method of fabricating or processing the composite article 120 includes forming the ceramic nanocomposite layer 124 on the substrate 22. That is, the substrate 22 may be pre-fabricated and the ceramic nanocomposite layer 124 may be formed on the pre-fabricated substrate 22. The particular technique selected for forming the ceramic nanocomposite layer 124 may depend upon the type of substrate 22, the desired end properties of the composite article 120 or a desire to use a certain process.

According to the invention, pre-ceramic polymer processing is used. Given this description, one of ordinary skill in the art will be able to recognize advantageous processing methods and parameters to meet their particular needs.

The forming of the ceramic nanocomposite layer 24 includes pre-ceramic polymer processing to achieve atomic level mixing of the constituent elements in appropriate ratios. The process includes pyrolyzing a single-source pre-ceramic polymer in a controlled atmosphere such as nitrogen. The single-source pre-ceramic polymer is a polyborosilazane with the desired ratio, R, of silicon atoms to boron atoms. That is, the single-source is a single polymeric precursor structure rather than a mixture of two or more pre-ceramic precursor sources with the desired ratio, R, of silicon atoms to boron atoms.

The pyrolysis may be conducted in a known manner, and the pre-ceramic polymer may be prepared in a known manner via reaction between organosilicon compounds and boron compounds. The ceramic nanocomposite layer 124 includes the oxide-forming material 126. The selected oxide-forming material or materials 126 along with any other additives are incorporated during the processing such that the final ceramic nanocomposite layer 124 includes the oxide-forming material or materials 126 and other additives. As an example, the metal or metals may be incorporated in metallic form by mixing with the pre-ceramic polymer prior to pyrolysis. Alternatively, the metal or metals may be provided as organometallic compounds that are mixed with the pre-ceramic polymer or precursors thereto. In another alternative, the metal or metals may be chemically incorporated into the polymer backbone of the pre-ceramic polymer rather than being physically mixed with the polymer. Likewise, the borides or silicides may be incorporated in the pre-ceramic polymer prior to pyrolysis. The use of solvents to improve dispersion of the oxide-forming material 126 is also contemplated. That is, the pre-ceramic polymer or the organometallic compound may be dissolved in a suitable solvent and mixed to ensure uniform distribution of the components. Following removal of the solvent through controlled heating and/or reduced pressure, a uniform mixture containing pre-ceramic polymer and oxide-forming material 126 is obtained.

The single source pre-ceramic polymer provides the benefit of an atomic level mixture of the elements of the composition of the ceramic nanocomposite layer 124. Thus, the elements chemically bonded in the pre-ceramic polymer can remain following pyrolysis to form nanosized phases or domains, rather than micro- or macro-sized phases that collectively have lower thermal/oxidative stability or other disadvantageous properties. Additionally, the single-source pre-ceramic polymer can be pyrolyzed at temperatures below 1200°C (2192 °F), which reduces thermal influence on the substrate 22. Higher temperatures may also be used to increase nanocrystal size or nanophase domain size or the extent of crystallinity of the phases, but may result in microstructures having less desirable phases or a substantial loss of boron or other elements of the composition.

Additionally, as suggested above, the ratio of silicon atoms to boron atoms may be controlled during the preparation of the pre-ceramic polymer to yield a final composition having a desired composition and properties. That is, the ratio of silicon atoms to boron atoms in the pre-ceramic polymer corresponds to the ratio in the final ceramic nanocomposite layer 124. Additionally, the silicon to boron ratio used in preparation of the polyborosilazane pre-ceramic polymer may control the molecular weight of the pre-ceramic polymer to tailor the polymer to certain processes. The pre-ceramic polymer with the above exemplary ratios may be further characterized by its molecular weight range, which may be between 1000-500,000 atomic mass units or Daltons as measured by standard gel permeation chromatography methods.

Although a combination of features is shown in the illustrated examples, not all of them need to be combined to realize the benefits of various embodiments of this invention. In other words, a system designed according to this invention will not necessarily include all of the features shown in any one of the Figures or all of the portions schematically shown in the Figures. Moreover, selected features of one example embodiment may be combined with selected features of other example embodiments.

It will therefore be apparent that the preceding description is exemplary rather than limiting in nature. Variations and modifications to the disclosed examples may become apparent to those skilled in the art that do not necessarily depart from the scope of the invention, which is defined by the claims.

## Claims

1. A composite article (120) comprising:
a substrate (22); and
a ceramic nanocomposite layer (124) disposed on the substrate, the ceramic nanocomposite layer comprising a pyrolized single-source polyborosilazane pre-ceramic polymer that is a single polymer precursor structure, rather than a mixture of two or more ceramic precursor sources, the ceramic nanocomposite layer having an amorphous microstructure with regions of ordered crystalline phases that have crystal grain dimensions or domains of less than one hundred nanometers, and the ceramic nanocomposite layer having a composition comprising silicon, boron, carbon and nitrogen, and at least one oxide-forming material (126) selected from a group consisting of oxide-forming metals/semi-metals, borides, silicides, and combinations thereof,
wherein the composition of the ceramic nanocomposite layer includes a ratio, R, of silicon atoms to boron atoms of 3 ≥ R ≥ 1.

2. The composite article as recited in claim 1, wherein the ceramic nanocomposite includes silicon nitride and boron nitride.

3. The composite article as recited in claim 2, wherein the carbon is in the form of silicon carbide, boron carbide, or combinations thereof.

4. The composite article as recited in any preceding claim, wherein the oxide-forming metal is selected from a group consisting of aluminum, titanium, zirconium, hafnium, vanadium, niobium, tantalum, chromium, molybdenum, tungsten, yttrium, ytterbium, scandium, rhenium, and combinations thereof.

5. The composite article as recited in claim 4, wherein the oxide forming metal is selected from a group consisting of vanadium, tantalum, tungsten, rhenium, and combinations thereof.

6. The composite article as recited in claim 4, wherein the oxide-forming metal includes hafnium.

7. The composite article as recited in claim 4, wherein the oxide-forming metal includes zirconium.

8. The composite article as recited in claim 4, wherein the oxide-forming metal includes aluminum.

9. The composite article as recited in any preceding claim, wherein the boride includes at least one metal selected from a group consisting of titanium, zirconium, hafnium, niobium, vanadium, tantalum, and tungsten.

10. The composite article as recited in any preceding claim, wherein the silicide includes at least one element selected from a group consisting of zirconium, hafnium, niobium, vanadium, titanium, tantalum, boron, molybdenum, and tungsten.

11. The composite article as recited in any preceding claim, wherein the substrate is a silicon-based ceramic material or a metallic material.

12. A method of processing a composite article (120), comprising:
forming a ceramic nanocomposite layer (124) by pyrolizing a single-source polyborosilazane pre-ceramic polymer that is a single polymer precursor structure, rather than a mixture of two or more ceramic precursor sources, such that the ceramic nanocomposite layer has an amorphous microstructure with regions of ordered crystalline phases that have crystal grain dimensions or domains of less than one hundred nanometers, and the ceramic nanocomposite layer having a composition that includes silicon, boron, carbon and nitrogen, and at least one oxide-forming material (126) selected from a group consisting of oxide-forming metals/semi-metals, borides, silicides, and combinations thereof on a substrate (22),
wherein the composition of the ceramic nanocomposite layer includes a ratio, R, of silicon atoms to boron atoms of 3 ≥ R ≥ 1.

13. The method as recited in claim 12, wherein the forming of the ceramic nanocomposite layer is conducted at a temperature below 1200°C.

14. The method as recited in claims 12 or 13, wherein the forming of the ceramic nanocomposite includes using a pre-ceramic polymer having a molecular weight of 1,000-500,000 atomic mass units.

## Patentansprüche

1. Kompositgegenstand (120), umfassend:
ein Substrat (22); und
eine keramische Nanokompositschicht (124), die auf dem Substrat angeordnet ist, wobei die keramische Nanokompositschicht ein pyrolisiertes vorkeramisches Polyborsilazan-Polymer einer einzigen Quelle umfasst, das einer einzigen Polymervorläuferstruktur anstelle eines Gemischs von zwei oder mehr keramischen Vorläuferquellen entspricht, wobei die keramische Nanokompositschicht eine amorphe Mikrostruktur mit Regionen von geordneten kristallinen Phasen aufweist, die Kristallkornabmessungen oder -bereiche von unter hundert Nanometern aufweisen, und die keramische Nanokompositschicht eine Zusammensetzung, umfassend Silicium, Bor, Kohlenstoff und Stickstoff, und mindestens ein Oxid bildendes Material (126), ausgewählt aus einer Gruppe, bestehend aus Oxid bildenden Metallen/Halbmetallen, Boriden, Siliciden und Kombinationen davon, aufweist,
wobei die Zusammensetzung der keramischen Nanokompositschicht ein Verhältnis, R, von Siliciumatomen zu Boratomen von 3 ≥ R ≥ 1 einschließt.

2. Kompositgegenstand nach Anspruch 1, wobei die keramische Nanokompositschicht Siliciumnitrid und Bornitrid einschließt.

3. Kompositgegenstand nach Anspruch 2, wobei der Kohlenstoff in Form von Siliciumcarbid, Borcarbid oder Kombinationen davon vorliegt.

4. Kompositgegenstand nach einem der vorhergehenden Ansprüche, wobei das Oxid bildende Metall aus einer Gruppe ausgewählt ist, bestehend aus Aluminium, Titan, Zirconium, Hafnium, Vanadium, Niob, Tantal, Chrom, Molybdän, Wolfram, Yttrium, Ytterbium, Scandium, Rhenium und Kombinationen davon.

5. Kompositgegenstand nach Anspruch 4, wobei das Oxid bildende Metall aus einer Gruppe ausgewählt ist, bestehend aus Vanadium, Tantal, Wolfram, Rhenium und Kombinationen davon.

6. Kompositgegenstand nach Anspruch 4, wobei das Oxid bildende Metall Hafnium einschließt.

7. Kompositgegenstand nach Anspruch 4, wobei das Oxid bildende Metall Zirconium einschließt.

8. Kompositgegenstand nach Anspruch 4, wobei das Oxid bildende Metall Aluminium einschließt.

9. Kompositgegenstand nach einem der vorhergehenden Ansprüche, wobei das Borid mindestens ein Metall einschließt, ausgewählt aus einer Gruppe, bestehend aus Titan, Zirconium, Hafnium, Niob, Vanadium, Tantal und Wolfram.

10. Kompositgegenstand nach einem der vorhergehenden Ansprüche, wobei das Silicid mindestens ein Element einschließt, ausgewählt aus einer Gruppe, bestehend aus Zirconium, Hafnium, Niob, Vanadium, Titan, Tantal, Bor, Molybdän und Wolfram.

11. Kompositgegenstand nach einem der vorhergehenden Ansprüche, wobei das Substrat ein keramisches Material auf Siliciumbasis oder ein metallisches Material ist.

12. Verfahren zum Bearbeiten eines Kompositgegenstands (120), umfassend:
Bilden einer keramischen Nanokompositschicht (124) durch das Pyrolisieren eines vorkeramischen Polyborsilazan-Polymers einer einzigen Quelle, das einer einzigen Polymervorläuferstruktur anstelle eines Gemischs von zwei oder mehr keramischen Vorläuferquellen entspricht, sodass die keramische Nanokompositschicht eine amorphe Mikrostruktur mit Regionen von geordneten kristallinen Phasen aufweist, die Kristallkornabmessungen oder -bereiche von unter hundert Nanometern aufweisen, und die keramische Nanokompositschicht eine Zusammensetzung, die Silicium, Bor, Kohlenstoff und Stickstoff aufweist, und mindestens ein Oxid bildendes Material (126), ausgewählt aus einer Gruppe, bestehend aus Oxid bildenden Metallen/Halbmetallen, Boriden, Siliciden und Kombinationen davon auf einem Substrat (22), aufweist,
wobei die Zusammensetzung der keramischen Nanokompositschicht ein Verhältnis, R, von Siliciumatomen zu Boratomen von 3 ≥ R ≥ 1 einschließt.

13. Verfahren nach Anspruch 12, wobei das Bilden der keramischen Nanokompositschicht bei einer Temperatur unterhalb von 1200 °C ausgeführt wird.

14. Verfahren nach Anspruch 12 oder 13, wobei das Bilden der keramischen Nanokompositschicht das Verwenden eines vorkeramischen Polymers einschließt, das ein Molekulargewicht von 1.000-500.000 atomaren Masseneinheiten aufweist.

## Revendications

1. Article composite (120) comprenant :
un substrat (22) ; et
une couche nanocomposite en céramique (124) disposée sur le substrat, la couche nanocomposite en céramique comprenant un polymère pré-céramique de polyborosilazane de source unique pyrolisé qui est une structure de précurseur de polymère unique, plutôt qu'un mélange de deux sources de précurseurs de céramique ou plus, la couche nanocomposite en céramique ayant une microstructure amorphe avec des régions de phases cristallines ordonnées qui ont des dimensions de grains cristallins ou domaines de moins de cent nanomètres, et la couche nanocomposite en céramique ayant une composition comprenant du silicium, du bore, du carbone et de l'azote, et au moins un matériau formant un oxyde (126) sélectionné dans un groupe constitué des métaux/semi-métaux formant des oxydes, des borures, des siliciures, et des combinaisons de ceux-ci,
dans lequel la composition de la couche nanocomposite en céramique comprend un rapport, R, des atomes de silicium sur les atomes de bore de 3 ≥ R ≥ 1.

2. Article composite selon la revendication 1, dans lequel le nanocomposite en céramique comprend du nitrure de silicium et du nitrure de bore.

3. Article composite selon la revendication 2, dans lequel le carbone se trouve sous la forme de carbure de silicium, de carbure de bore, ou de combinaisons de ceux-ci.

4. Article composite selon l'une quelconque des revendications précédentes, dans lequel le métal formant un oxyde est sélectionné dans un groupe constitué de l'aluminium, du titane, du zirconium, du hafnium, du vanadium, du niobium, du tantale, du chrome, du molybdène, du tungstène, de l'yttrium, de l'ytterbium, du scandium, du rhénium et des combinaisons de ceux-ci.

5. Article composite selon la revendication 4, dans lequel le métal formant un oxyde est sélectionné dans un groupe constitué du vanadium, du tantale, du tungstène, du rhénium et des combinaisons de ceux-ci.

6. Article composite selon la revendication 4, dans lequel le métal formant un oxyde comprend le hafnium.

7. Article composite selon la revendication 4, dans lequel le métal formant un oxyde comprend le zirconium.

8. Article composite selon la revendication 4, dans lequel le métal formant un oxyde comprend l'aluminium.

9. Article composite selon l'une quelconque des revendications précédentes, dans lequel le borure comprend au moins un métal sélectionné dans un groupe constitué du titane, du zirconium, du hafnium, du niobium, du vanadium, du tantale, et du tungstène.

10. Article composite selon l'une quelconque des revendications précédentes, dans lequel le siliciure comprend au moins un métal sélectionné dans un groupe constitué du zirconium, du hafnium, du niobium, du vanadium, du titane, du tantale, du bore, du molybdène, et du tungstène.

11. Article composite selon l'une quelconque des revendications précédentes, dans lequel le substrat est un matériau de céramique à base de silicium ou un matériau métallique.

12. Procédé de traitement d'un article composite (120), comprenant :
la formation d'une couche nanocomposite en céramique (124) par pyrolyse d'un polymère pré-céramique de polyborosilazane de source unique qui est une structure de précurseur de polymère unique, plutôt qu'un mélange de deux sources de précurseurs de céramique ou plus, de telle sorte que la couche nanocomposite en céramique a une microstructure amorphe avec des régions de phases cristallines ordonnées qui ont des dimensions de grains cristallins ou domaines de moins de cent nanomètres, et la couche nanocomposite en céramique ayant une composition comprenant du silicium, du bore, du carbone et de l'azote, et au moins un matériau formant un oxyde (126) sélectionné dans un groupe constitué des métaux/semi-métaux formant des oxydes, des borures, des siliciures, et des combinaisons de ceux-ci sur un substrat (22),
dans lequel la composition de la couche nanocomposite en céramique comprend un rapport, R, des atomes de silicium sur les atomes de bore de 3 ≥ R ≥ 1.

13. Procédé selon la revendication 12, dans lequel la formation de la couche nanocomposite en céramique est réalisée à une température inférieure à 1 200 °C.

14. Procédé selon les revendications 12 ou 13, dans lequel la formation du nanocomposite en céramique comprend l'utilisation d'un polymère pré-céramique ayant un poids moléculaire de 1 000 à 500 000 unités de masse atomique.
